(19) Europäisches Patentamt
European Patent Office
Office européen des brevets

(11) **EP 4 067 042 A1**

(12) **EUROPEAN PATENT APPLICATION**
published in accordance with Art. 153(4) EPC

(43) Date of publication:
**05.10.2022 Bulletin 2022/40**

(21) Application number: **20892086.8**

(22) Date of filing: **13.11.2020**

(51) International Patent Classification (IPC):
**B29C 45/00** (2006.01)     **B29C 45/27** (2006.01)
**C08F 214/26** (2006.01)     **C08F 216/14** (2006.01)

(52) Cooperative Patent Classification (CPC):
**B29C 45/00; B29C 45/27; C08F 214/26;
C08F 216/14**

(86) International application number:
**PCT/JP2020/042494**

(87) International publication number:
**WO 2021/106638 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.11.2019 JP 2019214947**

(71) Applicant: **Daikin Industries, Ltd.
Osaka-shi, Osaka 530-8323 (JP)**

(72) Inventors:
• **IMAMURA, Hitoshi
  Osaka-shi, Osaka 530-8323 (JP)**

• **HAMADA, Hiroyuki
  Osaka-shi, Osaka 530-8323 (JP)**
• **MUKAI, Eri
  Osaka-shi, Osaka 530-8323 (JP)**
• **KUWAJIMA, Yuuki
  Osaka-shi, Osaka 530-8323 (JP)**
• **FUJISAWA, Manabu
  Osaka-shi, Osaka 530-8323 (JP)**

(74) Representative: **Hoffmann Eitle
Patent- und Rechtsanwälte PartmbB
Arabellastraße 30
81925 München (DE)**

(54) **METHOD FOR PRODUCING INJECTION MOLDED ARTICLE**

(57)     Provided is a method for producing an injection molded article for obtaining an injection molded article by injection molding a copolymer using an injection molding machine and a mold having a hot runner, wherein the copolymer is a copolymer containing tetrafluoroethylene unit and a fluoroalkyl vinyl ether unit, and the number of functional groups of the copolymer is 100 or less per $10^6$ main-chain carbon atoms.

Figure 1

EP 4 067 042 A1

**Description**

TECHNICAL FIELD

The present disclosure relates to a method for producing an injection molded article.

BACKGROUND ART

As the method for molding a resin, injection molding methods are known.

Patent Document 1 describes an injection molding method comprising measuring the pressure in the resin channel in a mold, calculating the viscosity based on the pressure, and comparing the calculated viscosity with the reference viscosity to carry out the nondefective/defective determination of the molded article or to control molding conditions. Patent Document 1 also discloses that injection molding can be carried out without generation of loss materials such as a runner and a sprue by providing a hot runner chip in a mold and maintaining the resin in the hot runner chip always in a molten state.

RELATED ART

PATENT DOCUMENTS

Patent Document 1: Japanese Patent Laid-Open No. 1998-323874

SUMMARY OF THE INVENTION

PROBLEM TO BE SOLVED BY THE INVENTION

An object of the present disclosure is to provide a method for producing an injection molded article with which corrosion of a mold having a hot runner can be suppressed.

MEANS FOR SOLVING THE PROBLEM

The present disclosure provides a method for producing an injection molded article for obtaining an injection molded article by injection molding a copolymer using an injection molding machine and a mold having a hot runner, wherein the copolymer is a copolymer containing tetrafluoroethylene unit and a fluoroalkyl vinyl ether unit, and the number of functional groups of the copolymer is 100 or less per $10^6$ main-chain carbon atoms.

In the production method of the present disclosure, when the copolymer is melted in a cylinder in the injection molding machine and the molten copolymer is supplied into the hot runner, a space in the cylinder is preferably filled with an inert gas.

In the production method of the present disclosure, a cylinder temperature of the injection molding machine is preferably 350°C or higher.

In the production method of the present disclosure, a pressure in the space in the cylinder of the injection molding machine is preferably 0.1 MPa or less.

In the production method of the present disclosure, the fluoroalkyl vinyl ether unit is preferably at least one selected from the group consisting of perfluoro(methyl vinyl ether) unit, perfluoro(ethyl vinyl ether) unit, and perfluoro(propyl vinyl ether) unit.

In the production method of the present disclosure, a melt flow rate of the copolymer is preferably 0.1 to 100 g/10 minutes.

In the production method of the present disclosure, a content of the fluoroalkyl vinyl ether unit in the copolymer is preferably 3.0 to 12.0% by mass based on the total monomer unit.

In the production method of the present disclosure, the injection molded article is preferably a sealing member or an insulating member.

EFFECTS OF INVENTION

The present disclosure can provide a method for producing an injection molded article with which corrosion of a mold having a hot runner can be suppressed.

BRIEF DESCRIPTION OF DRAWINGS

Figure 1 is a view showing one embodiment of the production method of the present disclosure.
Figure 2 is a schematic view for illustrating a method for measuring the amount of fluorine ions generated.

DESCRIPTION OF EMBODIMENTS

Hereinafter, specific embodiments of the present disclosure will be described in detail, but the present disclosure is not limited to the following embodiments.

The method for producing an injection molded article of the present disclosure is a production method for obtaining an injection molded article by injection molding a copolymer using an injection molding machine and a mold having a hot runner.

The method for producing an injection molded article using a hot runner system arranged with a hot runner, a valve, a nozzle, and the like in a mold is a method for obtaining a molded article by providing a molten resin channel (hot runner) in a cylindrical body equipped with a heater heating means on its outer periphery, providing a nozzle having an injection hole at the tip of this channel, and injecting a resin into a cavity from a gate connecting to the cavity.

In the hot runner system, the resin is melted in the cylinder of the injection molding machine, and the molten resin is stored at the tip portion of the hot runner, and then flowed into the cavity by opening the valve, cooled in the cavity, and solidified.

The present disclosers have examined and found that, when a copolymer containing tetrafluoroethylene (TFE) unit and a fluoroalkyl vinyl ether (FAVE) unit (hereinafter, may be referred to as the TFE/FAVE copolymer) is used as the resin, the mold arranged with a hot runner may be corroded. As described above, in the injection molding method using a hot runner system, a high-temperature resin is retained in the hot runner. Examinations by the present disclosers revealed that volatile substances and fluorine ions are generated from the TFE/FAVE copolymer in a molten state and cause corrosion of the metal in contact with the TFE/FAVE copolymer in a molten state.

In a molding machine used to melt mold the TFE/FAVE copolymer, there is a case where an attempt of reducing the contamination caused by corrosion of steel materials have been made by employing a steel material having excellent corrosion resistance such as a high nickel alloy for a body that constitutes a channel, a slide nozzle, a valve, and the like. However, in a case where the TFE/FAVE copolymer is subjected to injection molding using the mold having a hot runner, it is difficult to sufficiently suppress the corrosion of the mold by such an attempt.

In the production method of the present disclosure, an injection molded article of a TFE/FAVE copolymer can be produced using a hot runner system by using a TFE/FAVE copolymer having a reduced number of functional groups, while sufficiently suppressing the corrosion of the mold having a hot runner.

Therefore, by using the production method of the present disclosure, advantages can be obtained such that a process of solidifying and taking out a sprue, a runner, a gate, and the like for each molding cycle can be omitted without increasing the cost required for the mold, the recycling loss of the TFE/FAVE copolymer is reduced, the cost required for recycling can be reduced, foreign matter contamination into the recycled raw material can be reduced, and the like.

Further, metal contamination of the injection molded article caused by the corrosion of the mold can also be suppressed. In addition, since the hot runner system is used, the formation of a dent (recess part) at the weld part is suppressed, the smoothness of the injection molded article is increased, and the adhesion of the particles to the surface of the injection molded article can be suppressed. As a result, an injection molded article of the TFE/FAVE copolymer that is unlikely to cause metal components to flow out and is unlikely to generate particles can be produced.

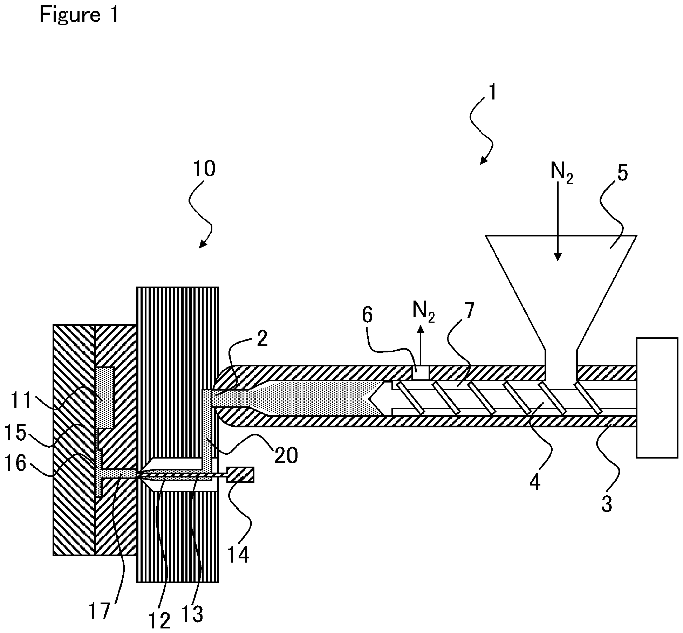

The production method of the present disclosure will be described further in detail with reference to the drawings. Figure 1 is a view showing one embodiment of the production method of the present disclosure. In Figure 1, reference numeral 1 is an injection molding machine and reference numeral 10 is a mold. In the injection molding machine 1, a screw 4 is housed in an externally heated cylinder 3, and when the screw 4 rotates, the copolymer supplied from a hopper 5 is transferred towards the tip (head) of the cylinder 3 while being melted.

In the mold 10, a hot runner 12 for supplying a copolymer 20 in a molten state ejected from the head 2 at the tip of the injection molding machine to a cavity 11 of the mold is provided, and the supply of the copolymer 20 stored in the hot runner 12 to the cavity 11 is controlled by opening and closing a valve pin 13 by a valve opening/closing control mechanism 14.

Since the copolymer 20 has a reduced number of functional groups, generation of volatile substances from the copolymer 20 in a molten state supplied to the hot runner 12 can be suppressed, and even when the copolymer 20 is stored in the hot runner 12 for a relatively long time, the corrosion of the mold 10 having the hot runner 12 is suppressed.

Further, in the cylinder 3 in the injection molding machine 1, an exhaust port 6 which penetrates from the inside to the outside of the cylinder 3 is provided. In the present embodiment, nitrogen gas is supplied from the hopper 5 into the cylinder 3, passes through a space 7 in the cylinder 3, and is discharged from the exhaust port 6. Although nitrogen gas is used in the present embodiment, the type of gas supplied into the cylinder 3 is not limited, and an inert gas such as nitrogen gas, argon gas, and helium gas can be used. The inert gas may be a gas filled in a bomb or a gas generated from a gas generating apparatus. Although nitrogen gas is supplied from the hopper 5 in the present embodiment, an inert gas inlet may be provided in the cylinder 3, separately from the hopper. In addition, the direction to which the inert gas circulates is not limited, and the inert gas may be circulated in a direction from the hopper to the head of the cylinder, or the inert gas may be circulated in a direction from the head of the cylinder to the hopper.

The method for supplying the inert gas into the cylinder 3 is not limited, but the inert gas is preferably supplied such that the space in the cylinder 3 can be filled with the inert gas. By filling the cylinder 3 only with the copolymer and the inert gas, not only generation of volatile substances from the copolymer 20 in a molten state to be supplied to the hot runner 12 can be suppressed, but also generation of fluorine ions from the copolymer 20 can be suppressed, so that the corrosion of the mold 10 having the hot runner 12 is further suppressed.

The cylinder 3 is heated by an external heat source such as a jacket heater and can melt the copolymer in the cylinder 3. The cylinder temperature of the cylinder 3 is not limited as long as it is a temperature equal to or higher than the melting point at which the copolymer can be melted, but is preferably 350°C or higher, more preferably 360°C or higher, even more preferably 370°C or higher, particularly preferably 380°C or higher because the copolymer sufficiently flows out and the productivity is improved. The upper limit may be, for example, the thermal decomposition temperature of the copolymer, and may be 410°C, 400°C, or 390°C. According to the production method of the present disclosure, even when the copolymer is melted at such a high temperature, the corrosion of the mold 10 having the hot runner 12 can be suppressed.

The cylinder 3 shown in Figure 1 is not sealed, and the pressure in the space in the cylinder 3 is normal pressure. The pressure in the space in the cylinder 3 is not necessarily normal pressure and may be controlled to the desired pressure, but it is preferable to avoid such a high pressure that the gas is mixed in the TFE/FAVE copolymer and causes the TFE/FAVE copolymer to foam. The pressure in the space in the cylinder 3 may be, for example, 0.1 MPa or less. Also, the pressure in the space in the cylinder 3 may be 0.13 MPa or less, 0.12 MPa or less, or 0.11 MPa or less.

In the present embodiment, the screw diameter is 25 to 42 mm$\phi$, the injection pressure is 25 to 90 MPa, the pressure keeping time is 20 seconds, the cooling time is 60 seconds, and the molding temperatures are: cylinder C1/cylinder C2/cylinder C3/nozzle/hot runner/mold = 350/370/380/380/380/200 (°C).

Examples of the material for the mold to be used in the production method of the present disclosure include Hastelloy C-276, Inconel 600, Mone400, NPR-FX25, X-alloy 306, H-alloy H305 and H503, and MA Plasthard S, C, B2, and YPT-2.

The mold may be a mold on which an anti-corrosion coating is formed, such as Cr, Ni, W, or Ni alloy.

The copolymer used in the production method of the present disclosure is a copolymer containing tetrafluoroethylene (TFE) unit and a fluoroalkyl vinyl ether (FAVE) unit (TFE/FAVE copolymer) in which the number of functional groups per $10^6$ main-chain carbon atoms is 100 or less. Since the production method of the present disclosure uses a copolymer having a functional group of 100 or less per $10^6$ main-chain carbon atoms, it is possible to suppress the corrosion of the mold having a hot runner even when the TFE/FAVE copolymer retains in the hot runner for a long time.

The number of functional groups per $10^6$ main-chain carbon atoms of the copolymer is 100 or less, and preferably 80 or less, more preferably 50 or less, even more preferably 20 or less, and particularly preferably 10 or less since the corrosion of the mold having a hot runner can be further suppressed.

Infrared spectroscopy can be used to identify the types of the functional groups and to measure the number of the functional groups.

Specifically, the number of functional groups is measured by the following method. First, the copolymer is molded by cold pressing to obtain a film with a thickness of 0.25 to 0.3 mm. This film is analyzed by Fourier transform infrared spectroscopy to obtain an infrared absorption spectrum, and a difference spectrum against a base spectrum that is completely fluorinated and has no functional groups is obtained. From the absorption peak of a specific functional group appearing in this difference spectrum, the number of functional groups N per 1 x $10^6$ carbon atoms in the copolymer is calculated according to the following formula (A).

$$N = I \times K/t \quad (A)$$

I:    Absorbance
K:    Correction coefficient
t:    Thickness of film (mm)

For reference, Table 1 shows the absorption frequency, the molar absorption coefficient, and the correction coefficient for the functional groups in the present disclosure. The molar absorption coefficients are determined from FT-IR measurement data of low molecular weight model compounds.

[Table 1]

Table 1

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Note that the absorption frequencies of $-CH_2CF_2H$, $-CH_2COF$, $-CH_2COOH$, $-CH_2COOCH_3$, and $-CH_2CONH_2$ are several tens of kaysers ($cm^{-1}$) lower than those of $-CF_2H$, $-COF$, $-COOH$ free and $-COOH$ bonded, $-COOCH_3$, and $-CONH_2$ shown in the table, respectively.

Accordingly, for example, the number of functional groups of $-COF$ is the sum of the number of functional groups determined from the absorption peak at an absorption frequency of 1,883 $cm^{-1}$ caused by $-CF_2COF$ and the number of functional groups determined from the absorption peak at an absorption frequency of 1,840 $cm^{-1}$ caused by $-CH_2COF$.

The functional groups are functional groups present at the end of the main chain or the end of the side chain of the copolymer, and present in the main chain or in the side chain. The number of functional groups may be the total number of $-CF=CF_2$, $-CF_2H$, $-COF$, $-COOH$, $-COOCH_3$, $-CONH_2$, and $CH_2OH$.

A chain transfer agent or a polymerization initiator used in producing a copolymer introduces the functional groups to the copolymer, for example. When an alcohol is used as a chain transfer agent, or a peroxide having the structure of $-CH_2OH$ is used as a polymerization initiator, for example, $-CH_2OH$ is introduced to the end of the main chain of the copolymer. Also, the polymerization of a monomer having a functional group introduces the functional groups to the end of the side chain of the copolymer.

By subjecting a copolymer having such functional groups to fluorination treatment, it is possible to obtain the copolymer having the number of functional groups within the above range. In other words, the copolymer used in the method for producing of the present disclosure is preferably one subjected to fluorination treatment. Also, the copolymer used in the method for producing of the present disclosure preferably has a $-CF_3$ terminal group.

It is possible to carry out the fluorination treatment by contacting a copolymer that has not been subjected to fluorination treatment with a fluorine-containing compound.

Examples of the fluorine-containing compounds include, but not limited to, fluorine radical sources that generate fluorine radicals under fluorination treatment conditions. Examples of the fluorine radical sources include $F_2$ gas, $CoF_3$, $AgF_2$, $UF_6$, $OF_2$, $N_2F_2$, $CF_3OF$, and halogen fluoride (e.g., $IF_5$, $ClF_3$).

The fluorine radical source such as the $F_2$ gas may be in 100% concentration, but from the standpoint of safety, it is preferable to mix the fluorine radical source with an inert gas and dilute it to 5 to 50% by mass before use and more preferable to dilute it to 15 to 30% by mass before use. Examples of the inert gases include nitrogen gas, helium gas, and argon gas, and nitrogen gas is preferable from the economic standpoint.

The conditions of the fluorination treatment are not limited, and the copolymer in a molten state may be contacted with the fluorine-containing compound, but usually it is possible to carry out the fluorination treatment at the melting point of the copolymer or lower temperature, preferably at a temperature of 20 to 220°C, more preferably temperature of 80 to 240°C, and still more preferably temperature of 100 to 220°C. The fluorination treatment is generally carried out for 1 to 30 hours and preferably 5 to 25 hours. The fluorination treatment is preferably conducted by contacting a copolymer that has not been subjected to fluorination treatment is contacted with a fluorine gas ($F_2$ gas) .

The copolymer used in the production method of the present disclosure contains TFE unit and a FAVE unit. The copolymer used in the production method of the present disclosure is a melt-fabricable fluororesin. Melt fabricable means that a polymer can be melted and processed using a conventional processing machine such as an extruder and an injection molding machine.

Examples of the FAVE constituting the FAVE unit mentioned above include at least one selected from the group consisting of a monomer represented by general formula (1):

$$CF_2=CFO(CF_2CFY^1O)_p\text{-}(CF_2CF_2CF_2O)_q\text{-}Rf \qquad (1)$$

wherein $Y^1$ represents F or $CF_3$; Rf represents a perfluoroalkyl group having 1 to 5 carbon atoms; p represents an integer of 0 to 5; and q represents an integer of 0 to 5, and a monomer represented by general formula (2):

$$CFX=CXOCF_2OR^1 \qquad (2)$$

wherein X is the same or different, and represents H, F, or $CF_3$; and $R^1$ represents a linear or branched fluoroalkyl group having 1 to 6 carbon atoms and optionally containing 1 to 2 atoms of at least one selected from the group consisting of H, Cl, Br and I, or a cyclic fluoroalkyl group having 5 or 6 carbon atoms and optionally containing 1 to 2 atoms of at least one selected from the group consisting of H, Cl, Br and I.

Among them, the FAVE is preferably the monomer represented by general formula (1), more preferably at least one selected from the group consisting of perfluoro(methyl vinyl ether), perfluoro(ethyl vinyl ether) (PEVE) and perfluoro(propyl vinyl ether) (PPVE), still more preferably at least one selected from the group consisting of PEVE and PPVE, and particularly preferably PPVE.

The content of the fluoroalkyl vinyl ether (FAVE) unit in the copolymer is preferably 1.0 to 12.0% by mass, more preferably 3.0% by mass or more, even more preferably 4.0% by mass or more, and particularly preferably 5.0% by mass or more, and more preferably 8.0% by mass or less, even more preferably 7.0% by mass or less, based on the total monomer unit. In the case where the content of the FAVE unit in the copolymer falls within the above range, it is possible to obtain an injection molded article having excellent compression-set resistance.

The content of tetrafluoroethylene (TFE) unit in the copolymer is preferably 99.0 to 88.0% by mass, more preferably 97.0% by mass or less, even more preferably 96.0% by mass or less, particularly preferably 95.0% by mass or less, and more preferably 92.0% by mass or more, even more preferably 93.0% by mass or more, based on the total monomer unit. In the case where the content of TFE unit in the copolymer falls within the above range, it is possible to obtain an injection molded article having excellent compression-set resistance.

In the present disclosure, the content of each monomer unit in the copolymer is measured by the $^{19}$F-NMR method.

The copolymer can also contain a monomer unit derived from a monomer copolymerizable with TFE and FAVE. In this case, the content of the monomer copolymerizable with TFE and FAVE is, preferably 0 to 10% by mass and more preferably 0.1 to 2.0% by mass, based on the total monomer unit in the copolymer.

Examples of monomers copolymerizable with TFE and FAVE include HFP, a vinyl monomer represented by $CZ^1Z^2=CZ^3(CF_2)_nZ^4$, wherein $Z^1$, $Z^2$ and $Z^3$ are the same or different, and represent H or F; $Z^4$ represents H, F, or Cl; and n is an integer of 2 to 10, and an alkyl perfluorovinyl ether derivative represented by $CF_2=CF\text{-}OCH_2\text{-}Pf^1$, wherein $Rf^1$ represents a perfluoroalkyl group having 1 to 5 carbon atoms. Among them, HFP is preferred.

The copolymer is preferably at least one selected from the group consisting of a copolymer consisting only of TFE unit and a FAVE unit and a TFE/HFP/FAVE copolymer, and more preferably a copolymer consisting only of TFE unit and a FAVE unit.

The melting point of the copolymer is preferably 280 to 322°C, more preferably 285°C or higher, and even more preferably 295°C or higher, and more preferably 320°C or lower, even more preferably 315°C or lower, and particularly preferably 310°C or lower, from the viewpoint of heat resistance. The melting point can be measured using a differential scanning calorimeter [DSC].

The glass transition temperature (Tg) of the copolymer is preferably 70°C or higher, more preferably 80°C or higher, even more preferably 85°C or higher, further preferably 90°C or higher, particularly preferably 95°C or higher, and most preferably 100°C or higher. The glass transition temperature can be measured by dynamic viscoelasticity measurement.

The melt flow rate of the copolymer may be 0.1 to 100 g/10 minutes, and is preferably 5 to 80 g/10 minutes, more preferably 10 g/10 minutes or more, even more preferably 20 g/10 minutes or more, and more preferably 60 g/10 minutes or less, even more preferably 50 g/10 minutes or less, particularly preferably 40 g/10 minutes or less, and most preferably 30 g/10 minutes or less. In the case where the melt flow rate of the copolymer falls within the above range, it is possible to obtain an injection molded article having excellent compression-set resistance with high productivity.

In the present disclosure, the melt flow rate is a value obtained as a mass (g/10 minutes) of a polymer flowing out per 10 minutes from a nozzle having an inner diameter of 2.1 mm and a length of 8 mm under a 5 kg load at 372°C using a melt indexer according to ASTM D1238.

The copolymer may be produced, for example, by appropriately mixing a monomer that will be a constituent unit thereof and an additive such as a polymerization initiator through a conventionally known method such as emulsion polymerization or suspension polymerization.

In the method for producing of the present disclosure, the form of the copolymer supplied to the injection molding machine is not limited, and a copolymer in the form of powder, pellet, or the like may be used.

In the method for producing of the present disclosure, by supplying other components other than a copolymer to the injection molding machine together with the copolymer, an injection molded article containing the copolymer and the other components may be obtained. Examples of the other components include a filling agent, a plasticizer, a pigment, a coloring agent, an antioxidant, a UV absorber, a flame retarder, an anti-aging agent, an antistatic agent, and antibacterial agent.

Among the other components, a filling agent is preferred. Examples of filling agents include silica, kaolin, clay, organized clay, talc, mica, alumina, calcium carbonate, calcium terephthalate, titanium oxide, calcium phosphate, calcium fluoride, lithium fluoride, cross-linked polystyrene, potassium titanate, carbon, boron nitride, a carbon nanotube, and a glass fiber.

In the case where the copolymer and other components are supplied into the injection molding machine, before supplying the composition to the injection molding machine, a composition containing the copolymer and the other components may be prepared in advance, and the obtained composition may be supplied into the injection molding machine. Examples of methods for producing the composition include a method of dry-mixing the copolymer and the other components and a method of mixing the copolymer and the other components in advance in a mixer, followed by melt-kneading in a kneader, a melt extruder, or the like.

The injection molded article obtained by the production method of the present disclosure can be used in various applications.

The production method of the present disclosure is particularly effective for the production of small molded articles in which the scrap loss in the runner part affects the unit cost of the product. By using the production method of the present disclosure, the collection operation of the runner can be eliminated and the effect of shortening the molding cycle can be expected. In addition, since the copolymer is not cooled in the runner and the fluidity thereof is improved, various advantages are expected such that the effect of masking the weld line of the injection molded article to be obtained is achieved and problems of stringiness and occurrence of clogging in the gate are eliminated. Specific examples are shown below.

For example, in a secondary battery, a small and thin sealing member such as a sealing gasket or a sealing packing is used to prevent leakage of liquid or gas, or ingress of liquid or gas from outside. Furthermore, in a secondary battery, a small and thin insulating member such as an insulating gasket or an insulating packing is used to insulate electricity. In the method for producing of the present disclosure, it is possible to obtain a large number of thin injection molded articles while suppressing corrosion of the mold. Therefore, the method for producing of the present disclosure enables to suitably produce a sealing member, an insulation member, and the like as an injection molded article.

The method for producing of the present disclosure also enables to provide a large and thin injection molded article while suppressing corrosion of the mold. Therefore, the method for producing of the present disclosure enables to suitably produce members for a semiconductor manufacturing apparatus or a substrate cleaning apparatus or housings thereof. Additionally, the method for producing of the present disclosure enables to produce these members and housings with a projected area of 400 cm$^2$ or more in the injection direction, while suppressing corrosion of the mold.

The method for producing of the present disclosure is also applicable to insert molding, multi-color molding, different material molding, decorative molding (film insert molding and film in-mold molding), injection compression molding, rapid heating and rapid cooling molding, and the like.

The embodiments are described above, but it will be understood that various changes in embodiments and details are possible without departing from the scope and spirit of the claims.

EXAMPLES

Next, the embodiments of the present disclosure will be described with Experimental Examples, but the present disclosure is not limited to such Experimental Examples.

Each value in Experimental Examples were measured by the following method.

(Content of Monomer Unit)

The content of each monomer unit was measured by an NMR analyzer (e.g., AVANCE 300 high-temperature probe, manufactured by Bruker BioSpin).

(Melt Flow Rate (MFR))

The mass of polymer flowing out of a nozzle with an inner diameter of 2.1 mm and a length of 8 mm per 10 minutes (g/10 minutes) under a 5 kg load at 372°C was determined using a melt indexer G-01 (manufactured by Toyo Seiki Seisaku-sho, Ltd.) according to ASTM D1238.

(Melting Point)

The melting point was determined as the temperature corresponding to the maximum value in the heat-of-fusion curve when the temperature was raised at a rate of 10°C/min using a differential scanning calorimeter (product name: X-DSC7000, manufactured by Hitachi High-Tech Science Corporation).

(Number of Functional Groups)

Pellets of the copolymer were molded by cold pressing to obtain a film with a thickness of 0.25 to 0.3 mm. This film was scanned 40 times by a Fourier transform infrared spectrometer [FT-IR (Spectrum One, manufactured by PerkinElmer Co., Ltd.)] and analyzed to obtain an infrared absorption spectrum, and a difference spectrum against a base spectrum that is completely fluorinated and has no functional groups was obtained. From the absorption peak of a specific functional group appearing in this difference spectrum, the number of functional groups N per $1 \times 10^6$ carbon atoms in the sample was calculated according to the following formula (A).

$$N = I \times K/t \ (A)$$

I:    Absorbance
K:    Correction coefficient
t:    Thickness of film (mm)

For reference, Table 2 shows the absorption frequency, the molar absorption coefficient, and the correction coefficient for the functional groups in the present disclosure. Furthermore, the molar absorption coefficients were determined from FT-IR measurement data of low molecular weight model compounds.

[Table 2]

Table 2

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

In each experiment, the following copolymers were used.

(Copolymer 1)

Tetrafluoroethylene (TFE)/perfluoro(propyl vinyl ether) (PPVE) copolymer

Mass ratio of TFE/PPVE: 94.1/5.9 (% by mass)

MFR: 15 g/10 min

Melting point: 301°C

Number of functional groups: $284/10^6$ carbon atoms

(Copolymer 2)

Tetrafluoroethylene (TFE)/perfluoro(propyl vinyl ether) (PPVE) copolymer

Mass ratio of TFE/PPVE: 94.1/5.9 (% by mass)

MFR: 15 g/10 min

Melting point: 301°C

Number of functional groups: $0/10^6$ carbon atoms

The copolymer 2 was produced using a mixed gas containing 30% by volume of fluorine gas and 70% by volume of nitrogen gas by fluorinating the copolymer 1.

Experimental Example 1

In this Experimental Example, the volatile substance index (VI value) of the heated TFE/FAVE copolymer was determined.
The volatile substance index (VI value) was determined in accordance with the method described in International Publication No. WO 98/09784. First, 10 g sample of the copolymer was placed in a 100 ml heat resistant container, the gas in the container was sucked until the internal pressure of the container reached 2 mmHg or less, and then the container was placed in a hot block kept at 380°C to achieve thermal equilibrium. Thereafter, changes in pressure in the container were recorded every 10 minutes for 60 minutes, and the volatile substance index (VI value) was calculated by the following formula.

$$\text{Volatile substance index} = (P_t - P_0) \times V/(10 \times W)$$

$P_t$: Pressure t minutes after insertion in hot block (mmHg)
$P_0$: Pressure before insertion in hot block (mmHg)
V: Volume of container (100 ml)
W: Weight of sample (10 g)

Table 3 shows the results.

[Table 3]

Table 3

| | | Volatile substance index (VI value) | |
|---|---|---|---|
| Heating temperature | Heating time | Copolymer 1 | Copolymer 2 |
| 380°C | 0 minutes | 0 | 0 |
| | 30 minutes | 12 | 2 |
| | 60 minutes | 41 | 4 |

As seen from the results in Table 3, the volatile substance index (VI value) of the copolymer 2 is smaller than the volatile substance index (VI value) of the copolymer 1. Therefore, it can be seen that the volatile substances generated upon melting the TFE/FAVE copolymer and the volatile substances generated from the TFE/FAVE copolymer in a molten state can be suppressed by reducing the number of functional groups of the copolymer.

Experimental Example 2

In this Experimental Example, the amount of fluorine ions generated from the heated TFE/FAVE copolymer was determined.

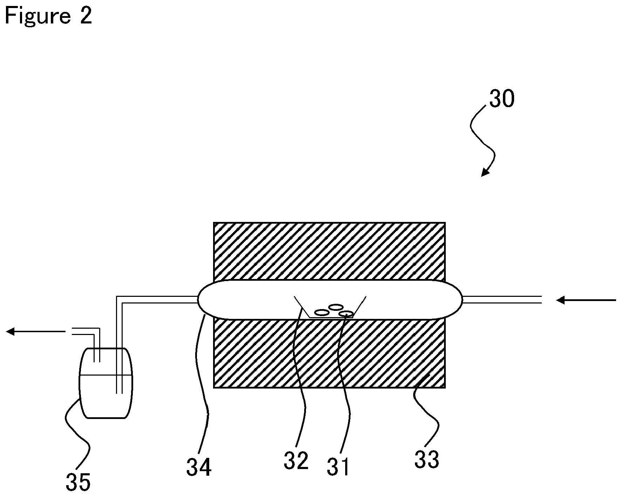

Figure 2 is a schematic view for illustrating the method for measuring the amount of fluorine ions generated. Using 2 g of pellets of the copolymer 2 as the sample, and as shown in Figure 2, a quartz board 32 on which the sample 31 was placed was set in a quartz tube 34 in an electric furnace 33 heated at 380°C. Nitrogen or air was supplied from one side of the quartz tube 34 at a flow velocity of 30 ml/minutes, and the gas exhausted from another side of the quartz tube was collected using a bubbler 35 containing water. The amount of fluorine ions (mg/L) in the obtained collection liquid was measured with a fluorine ion meter.
Table 4 shows the results.

[Table 4]

Table 4

| | | Amount of fluorine ions generated (mg/L) | |
|---|---|---|---|
| Heating temperature | Heating time | Nitrogen | Air |
| 380°C | 0 minutes | 1 | 1 |
| | 30 minutes | 2 | 24 |
| | 60 minutes | 3 | 36 |

As seen from the results in Table 4, when the TFE/FAVE copolymer is melted in air, fluorine ions are generated also from the TFE/FAVE copolymer having a reduced number of functional groups. On the other hand, it can be seen that the fluorine ions generated upon melting the TFE/FAVE copolymer and the fluorine ions generated from the TFE/FAVE copolymer in a molten state can be suppressed by using the TFE/FAVE copolymer having a reduced number of functional groups and melting the TFE/FAVE copolymer in an inert gas.

Experimental Example 3

In this Experimental Example, the influence of the atmosphere around the TFE/FAVE copolymer on a metal test piece in contact with the TFE/FAVE copolymer was examined.
In this experiment, the sample was heated as shown in Figure 2, in the same manner as in Experimental Example 2. First, a sample in which a metal test piece was embedded in 2 g of pellets of the copolymer 1 or a sample in which a metal test piece was embedded in 2 g of pellets of the copolymer 2 was produced. As the metal test piece, a metal plate (10 mm square) made of HASTELLOY (R) C276 was used.
Next, the quartz board on which the sample was placed was set in the quartz tube in an electric furnace heated at 380°C. The sample was left in the quartz tube for 60 minutes in a state where nitrogen or air was supplied from one side of the quartz tube at a flow velocity of 30 ml/minutes. The metal test piece was taken out from the collected sample, and the color of the surface of the metal test piece was visually observed and evaluated according to the following criteria.

Excellent: no change in color after heating
Acceptable: slightly darkens
Poor: darkens

The results are shown in Table 5.

[Table 5]

Table 5

|  | Copolymer 1 | | Copolymer 2 | |
| --- | --- | --- | --- | --- |
| Type of gas supplied | Air | Nitrogen | Air | Nitrogen |
| Results of observation of metal surface | Poor | Acceptable | Poor | Excellent |

As seen from the results in Table 5, it can be seen that, when the TFE/FAVE copolymer is melted in the air, the molten TFE/FAVE copolymer corrodes the metal. On the other hand, it can be seen that, when the TFE/FAVE copolymer having a reduced number of functional groups is used and the TFE/FAVE copolymer is melted in an inert gas, the corrosion of the metal is suppressed even by leaving the molten TFE/FAVE copolymer and the metal in contact with each other for a long time.
The above results show that, when the TFE/FAVE copolymer has a large number of functional groups, volatile substances are generated upon melting the TFE/FAVE copolymer or from the TFE/FAVE copolymer in a molten state. Further, when the number of functional groups of the TFE/FAVE copolymer is reduced, generation of the volatile substances from the TFE/FAVE copolymer in a molten state can be suppressed, but the generation of fluorine ions from the TFE/FAVE copolymer in a molten state cannot be sufficiently suppressed, causing corrosion of the metal in contact with the copolymer.
On the other hand, it can be seen that the corrosion of the metal is suppressed by using a copolymer having a reduced number of functional groups and melting the TFE/FAVE copolymer in an inert gas, even when a state where the metal is in close contact with the molten TFE/FAVE copolymer continues for a long time.

REFERENCE SIGNS LIST

1    Injection molding machine
2 Head
3 Cylinder
4 Screw
5 Hopper
6 Exhaust port
7 Space in cylinder
10    Mold
11 Cavity
12 Hot runner
13 Valve pin
14 Valve opening/closing control mechanism
15 Gate
16 Runner
17 Sprue
20    Copolymer
30    Fluorine ion measurement apparatus
31 Sample

32 Quartz board
33 Electric furnace
34 Quartz tube
35 Bubbler

## Claims

1. A method for producing an injection molded article for obtaining an injection molded article by injection molding a copolymer using an injection molding machine and a mold having a hot runner, wherein the copolymer is a copolymer containing tetrafluoroethylene unit and a fluoroalkyl vinyl ether unit, and the number of functional groups of the copolymer is 100 or less per $10^6$ main-chain carbon atoms.

2. The production method according to claim 1, wherein when the copolymer is melted in a cylinder in the injection molding machine and the molten copolymer is supplied into the hot runner, a space in the cylinder is filled with an inert gas.

3. The production method according to claim 1 or 2, wherein a cylinder temperature of the injection molding machine is 350°C or higher.

4. The production method according to any one of claims 1 to 3, wherein a pressure in the space in the cylinder of the injection molding machine is 0.1 MPa or less.

5. The production method according to any one of claims 1 to 4, wherein the fluoroalkyl vinyl ether unit is at least one selected from the group consisting of perfluoro(methyl vinyl ether) unit, perfluoro(ethyl vinyl ether) unit, and perfluoro(propyl vinyl ether) unit.

6. The production method according to any one of claims 1 to 5, wherein a melt flow rate of the copolymer is 0.1 to 100 g/10 minutes.

7. The production method according to any one of claims 1 to 6, wherein a content of the fluoroalkyl vinyl ether unit in the copolymer is 3.0 to 12.0% by mass based on the total monomer unit.

8. The production method according to any one of claims 1 to 7, wherein the injection molded article is a sealing member or an insulating member.

Figure 1

Figure 2

## INTERNATIONAL SEARCH REPORT

| International application No. |
| --- |
| PCT/JP2020/042494 |

**A.  CLASSIFICATION OF SUBJECT MATTER**
Int.Cl. B29C45/00(2006.01)i, B29C45/27(2006.01)i, C08F214/26(2006.01)i,
C08F216/14(2006.01)i
FI: B29C45/00, B29C45/27, C08F214/26, C08F216/14
According to International Patent Classification (IPC) or to both national classification and IPC

**B.  FIELDS SEARCHED**

Minimum documentation searched (classification system followed by classification symbols)
Int.Cl. B29C45/00, B29C45/27, C08F214/26, C08F216/14

| Documentation searched other than minimum documentation to the extent that such documents are included in the fields searched | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 62-104822 A (E.I.DU PONT DE NEMOURS AND COMPANY) 15 May 1987 (1987-05-15), claims, page 2, upper left column, lines 10-17, page 2, upper right column, line 17 to lower right column, line 13, page 3, upper left column, lines 12-19, page 3, upper right column, line 14 to lower left column, line 1, page 4, lower left column, line 8, examples | 1-8 |
| Y | JP 09-131773 A (NISSEI PLASTICS IND CO.) 20 May 1997 (1997-05-20), paragraphs [0011], [0015] | 1-8 |
| Y | JP 11-028725 A (CANON INC.) 02 February 1999 (1999-02-02), paragraph [0006], fig. 8, 9 | 1-8 |
| Y | JP 2004-161975 A (JSR CORPORATION) 10 June 2004 (2004-06-10), paragraphs [0110], [0114] | 1-8 |

☒  Further documents are listed in the continuation of Box C.          ☒  See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 17 December 2020 | 28 December 2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/042494 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-238960 A (DAIKIN INDUSTRIES, LTD.) 20 September 2007 (2007-09-20), entire text, all drawings | 1-8 |
| A | WO 2019/003265 A1 (DUPONT MITSUI FLUOROCHEMICALS COMPANY, LTD.) 03 January 2019 (2019-01-03), entire text, all drawings | 1-8 |
| A | WO 03/048214 A1 (DAIKIN INDUSTRIES, LTD.) 12 June 2003 (2003-06-12), entire text, all drawings | 1-8 |
| A | JP 2005-320497 A (DAIKIN INDUSTRIES, LTD.) 17 November 2005 (2005-11-17), entire text, all drawings | 1-8 |

Form PCT/ISA/210 (second sheet) (January 2015)

**INTERNATIONAL SEARCH REPORT**
Information on patent family members

| International application No. |
| --- |
| PCT/JP2020/042494 |

```
JP 62-104822 A      15 May 1987        US 4743658 A
                                       claims, column 1, lines 13-20,
                                       column 1, line 41 to column 2,
                                       line 18, column 2, lines 42-49,
                                       column 2, line 64 to column 3,
                                       line 2, column 4, lines 32, 33,
                                       examples
                                       EP 220910 A2


JP 09-131773 A      20 May 1997        US 6187229 B1
                                       column 4, lines 41-45, column 5,
                                       lines 10-19


JP 11-028725 A      02 February 1999   (Family: none)

JP 2004-161975 A    10 June 2004       (Family: none)

JP 2007-238960 A    20 September 2007  US 2005/0020792 A1
                                       entire text, all drawings
                                       EP 1462458 A1
                                       CN 1599757 A
                                       KR 10-2004-0071160 A


WO 2019/003265 A1   03 January 2019    US 2020/0114563 A1
                                       entire text, all drawings
                                       EP 3647344 A1
                                       CN 111032746 A
                                       KR 10-2020-0023400 A


WO 03/048214 A1     12 June 2003       US 2005/0020792 A1
                                       entire text, all drawings
                                       EP 1462458 A1
                                       CN 1599757 A
                                       KR 10-2004-0071160 A


JP 2005-320497 A    17 November 2005   (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10323874 A

- WO 9809784 A